# EUROPÄISCHE PATENTSCHRIFT

(11) **EP 1 418 005 B1**
(45) Veröffentlichungstag und Bekanntmachung des Hinweises auf die Patenterteilung: **24.01.2007**
(21) Anmeldenummer: 03022544.5
(22) Anmeldetag: 02.10.2003
(51) Int. Cl.: B02C 23/08, B02C 23/02, B02C 23/18, B02C 13/286, B03B 9/06, B07B 9/00

(54) **Verfahren und Vorrichtung zum Sortieren und Zerkleinern von Abfällen**
Method and device for sorting and comminuting waste
Procédé et dispositif pour trier et broyer des déchets

(30) Priorität: 11.10.2002 DE 10247512
(43) Veröffentlichungstag der Anmeldung: 12.05.2004
(73) Patentinhaber: LINDE-KCA-Dresden GmbH, 01277 Dresden (DE)
(72) Erfinder: Pilz, Gerhard, 4470 Enns (AT)

(56) Entgegenhaltungen:
- FR-A- 1 510 164
- FR-A- 2 614 556
- US-A- 4 730 790
- US-A- 5 232 168

## Beschreibung

Die Erfindung betrifft ein Verfahren zum Sortieren und Zerkleinern von Abfällen, insbesondere von kommunalem und/oder gewerblichem Müll, wobei die Abfälle einer Mühle zugeführt werden und ein Teil der Abfälle im Mahlwerk der Mühle zerkleinert wird, während ein Störstoffanteil der Abfälle unter Umgehung des Mahlwerks über einen Störstoffaustrag abgezogen wird, sowie eine Vorrichtung zur Durchführung des Verfahrens.

Ein wichtiger Schritt bei der Behandlung von Müll ist das Müllsortieren. Früher wurde das Müllsortieren weitgehend durch händisches Vorsortieren,bewerkstelligt. Eine erste Erleichterung bei dieser unangenehmen Tätigkeit wurde durch den Einsatz mechanischer Hilfseinrichtungen erreicht. Beispielsweise wurde durch Magnete ein Aussondem und Abtrennen einzelner Müllbestandteile ermöglicht. Üblicherweise wird nach dem Vorsortieren der Müll in geeigneten Zerkleinerungseinrichtungen, zum Beispiel einer schnell laufenden Mühle, insbesondere einer Prallmühle, zerkleinert. Der zerkleinerte Müll wird anschließend gesiebt, um grobes von feinem Korn zu trennen.

Eine wesentliche Verbesserung auf diesem Gebiet wurde durch das in der AT-PS 38 67 68 beschriebene Verfahren erreicht. Dieses Verfahren sieht eine Integration der verschiedenen Schritte, nämlich Vorsortierung, Zerkleinerung und Nachsortierung, in einer einzigen Einheit vor. Hierzu ist die Mühle dahingehend weitergebildet, dass sie nicht nur der Zerkleinerung, sondern zusätzlich einer neuen Aufgabe, nämlich dem Sortieren von Abfällen, dienen kann. Bei dem dort vorgeschlagenen Verfahren wird der Müll einer Prallmühle mit veränderbaren Mahlparametern, wie zum Beispiel verstellbarem Rost oder verstellbarer Prallplatte und/oder verstellbarer Mahlbahn, aufgegeben. Die Komgrößenverteilung unterschiedlicher Materialfraktionen des die Prallmühle verlassenden zerkleinerten Mülls wird gemessen und der zumindest teilweise zerkleinerte Müll wird wenigstens einem Sieb aufgegeben. Dabei wird wenigstens ein Sieb mit einer Siebschnittlinie in einem relativem Minimum der materiaispezifischen Korngrößenverteilung oder dem Schnittpunkt benachbarter materialspezifischen Korngrößenverteilungen eingesetzt und die Mahlparameter werden in Abhängigkeit von materialspezifischen Korngrößenverteilungskurven so verstellt, dass sich ausgeprägte Minima und/oder Schnittpunkte benachbarter materialspezifischer Korngrößenverteilungskurven ergeben.

Obwohl mit diesem bekannten Verfahren eine fortschrittliche Methode zum gleichzeitigen Zerkleinern und Sortieren von Abfällen gefunden wurde, besteht bei bestimmten Anwendungsfällen, insbesondere im Falle des Vorhandenseins größerer Störstoffanteile in den Abfällen, noch ein Verbesserungsbedarf. Bisher war zum Schutz des Mühlenraumes beziehungsweise Prallwerks der Mühle ein Störstoffaustrag über einen ballistischen Schacht vorgesehen, wie dies in US-A-5 232 168 offenbart ist. Die auf diese Weise abgeschiedenen Störstoffe gelangten üblicherweise danach unsortiert wieder auf das Abzugsband von der Mühle.

Der vorliegenden Erfindung liegt daher die Aufgabe zugrunde, ein Verfahren der eingangs genannten Art sowie eine Vorrichtung zur Durchführung des Verfahrens so auszugestalten, dass auf wirtschaftliche Weise eine weitestgehende Sortierung der Abfälle, auch bei erhöhtem Störstoffanteil, ermöglicht wird.

Diese Aufgabe wird verfahrensseitig erfindungsgemäß dadurch gelöst, dass der Störstoffaustrag zur Sortierung von Abfallfraktionen eingesetzt wird.

Der Erfindung liegt die Überlegung zugrunde, den Störstoffaustrag zusätzlich für einen völlig anderen Zweck, nämlich gezielt zur Sortierung von Abfallfraktionen, insbesondere zur Abscheidung von zum Beispiel flugfähigen Folien aus dem Abfallstrom, zu nutzen. Auf diese Weise wird erreicht, dass nicht nur die in der Mühle zerkleinerten Abfälle sortiert werden können, sondern auch die bisher unsortiert unter Umgehung des Mahlwerks von der Mühle abgezogenen Abfallfraktionen.

Zweckmäßigerweise werden der Störstoffanteil und gegebenenfalls weitere Abfälle, insbesondere flugfähige Abfälle, zum Beispiel Folien, mittels fördertechnischer Einrichtungen, zum Beispiel Transportrollen, in den Störstoffaustrag überführt. Auf diese Weise kann die Anreicherung von zum Beispiel Folien beim Eingang in den Störstoffaustrag unterstützt werden.

Gemäß einer besonders bevorzugten Ausgestaltung der Erfindung werden flugfähige Abfallfraktionen mittels einer im Störstoffaustrag zumindest zeitweise eingeschalteten Gasströmung von den restlichen Abfällen abgetrennt. Durch eine derartige Windsichtung werden insbesondere die flugfähigen Abfallbestandteile wie zum Beispiel Folien von schwereren Abfallbestandteilen getrennt. Die Abluft aus dieser Windsichtung wird vorzugsweise einer Abreinigung beziehungsweise Entstaubung unterzogen und wird danach vollständig oder als Teilstrom im Kreislauf zurückgeführt.

Eine effektive Sortierung der Abfälle wird vorteilhafterweise durch fördertechnische Einrichtungen im Störstoffaustrag unterstützt. Dabei werden die im Störstoffaustrag befindlichen Abfälle mittels fördertechnischer Einrichtungen in verschiedene Abfallfraktionen sortiert und verschiedenen Abzweigungen des Störstoffaustrags zugeteilt.

Eine Weiterbildung des Erfindungsgedankens sieht vor, dass die über den Störstoffaustrag abgezogenen nicht-flugfähigen Abfälle mittels eines Wirbelstromabscheiders in verschiedene Abfallfraktionen sortiert werden. Auf diese Weise wird eine größtmögliche Sortierung der Abfallfraktionen erreicht.

Die Erfindung betrifft femer eine Vorrichtung zum Sortieren und Zerkleinern von Abfällen, insbesondere von kommunalem und/oder gewerblichem Müll, mit einer Mühle, welche einen Mühlenraum mit einem Mahlwerk aufweist, wobei der Mühlenraum mit einem Abfallschacht zur Zuführung der zu zerkleinemden Abfälle verbunden ist, und vom Abfallschacht ein Störstoffaustragsschacht unter Umgehung des Mühlenraumes abzweigt.

Vorrichtungsseitig wird die gestellte Aufgabe erfindungsgemäß dadurch gelöst, dass der Störstoffaustragsschacht mit Einrichtungen zur Sortierung von Abfallfraktionen ausgestattet ist.

Dabei kann der Störstoffaustragsschacht entweder durch entsprechende Neigung als Schurre ausgeführt sein oder mittels Vibrationstechnik als Förderrinne ausgebildet sein. Die nicht-flugfähigen Abfallbestandteile können entweder unsortiert über den Störstoffaustragsschacht abtransportiert oder über eine nachgeschaltete oder integrierte mechanische Sortierung in Eisenbestandteile, inerte Teile und Nicht-Eisenbestandteile getrennt und für eine Verwertung abtransportiert werden.

Zur Überführung der Störstoffanteile und gegebenenfalls weiterer Abfälle, insbesondere flugfähiger Abfälle, in den Störstoffaustragsschacht sind zweckmäßigerweise in Nähe der Abzweigung des Störstoffaustragsschachts vom Abfallschaft fördertechnische Einrichtungen angeordnet. Diese können zum Beispiel als Transportrollen ausgebildet sein.

Besonders bevorzugt ist der Störstoffaustragsschacht mit einer Gaszufuhreinrichtung zur Windsichtung der Abfallfraktionen ausgestattet. Im einfachsten Fall ist hierfür ein Ventilator mit oder ohne regulierbaren Einstellvorrichtungen vorgesehen, um Zuluft quer zum Störstoffaustragsschacht einzublasen. Um eine Kreislaufführung zu ermöglichen, weist der Störstoffaustragsschacht vorteilhafterweise eine Gasabzugseinrichtung auf, welche über eine Abreinigungseinrichtung mit der Gaszufuhreinrichtung in Verbindung steht.

Zur Sortierung der im Störstoffaustragsschacht befindlichen Abfallbestandteile ist der Störstoffaustragsschacht vorzugsweise mit mindestens einer Abzweigung versehen, wobei in Nähe der Abzweigung fördertechnische Einrichtungen, z.B. Transportrollen, zur Überführung von Abfallfraktionen in die Abzweigung angeordnet sind.

Eine weitergehende Sortierung der Abfälle kann gemäß einer Weiterbildung des Erfindungsgedankens dadurch erreicht werden, dass am Ausgang des Störstoffaustragsschachts ein Wirbelstromabscheider zur Sortierung der Abfallfraktionen angeordnet ist.

Eine weitere Ausgestaltung der Vorrichtung sieht vor, dass der Störstoffaustragsschacht Vibrationseinrichtungen aufweist.

Mit der Erfindung wird auf wirtschaftliche Weise neben der Abscheidung von Störstoffen auch eine weitgehende Sortierung von Abfällen erreicht. Insbesondere bei Verwendung der in der AT-PS 38 67 68 beschriebenen Prallmühle mit veränderbaren Mahlparametern wird insgesamt eine weitestgehende Sortierung von Abfallfraktionen ermöglicht. Neben der Sortierung der in der Mühle zerkleinerten Abfälle kann nämlich mit der Erfindung auch eine Sortierung der über den Störstoffaustrag unter Umgehung des Mahlwerks abgezogenen Abfallfraktionen erreicht werden. Darüber hinaus wird eine gezielte Abscheidung von flugfähigen Folien ermöglicht.

Die Erfindung eignet sich zur Anwendung bei allen denkbaren Abfällen, insbesondere zur Zerkleinerung und Sortierung von Hausmüll, Restabfällen, Sortierresten, Gewerbeund Sperrmüll. Die Zerkleinerung und Sortierung kann beispielsweise einer biologischen Aufbereitung des Mülls vorgeschaltet sein. Die biologische Aufbereitung kann als Vergährung oder Kompostierung ausgebildet sein.

Im folgenden soll die Erfindung anhand eines in Figuren schematisch dargestellten Ausführungsbeispiels näher erläutert werden.

Es zeigen
- Figur 1: ein Schnittbild einer Mühle mit Störstoffaustrag nach dem Stand der Technik;

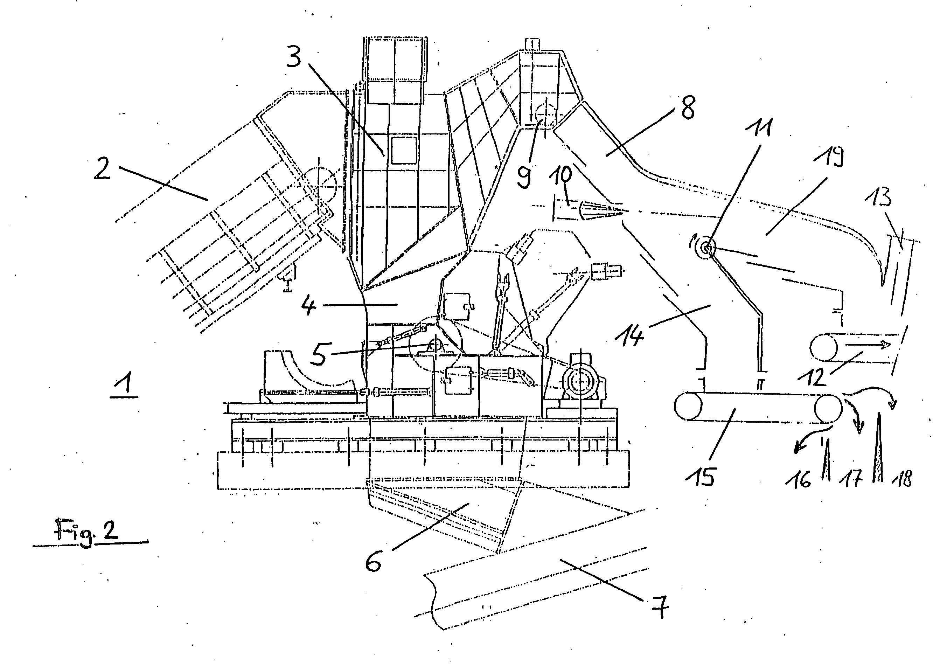

- Figur 2: eine Mühle mit Störstoffaustrag und integrierter Abfallsortierung nach der Erfindung.

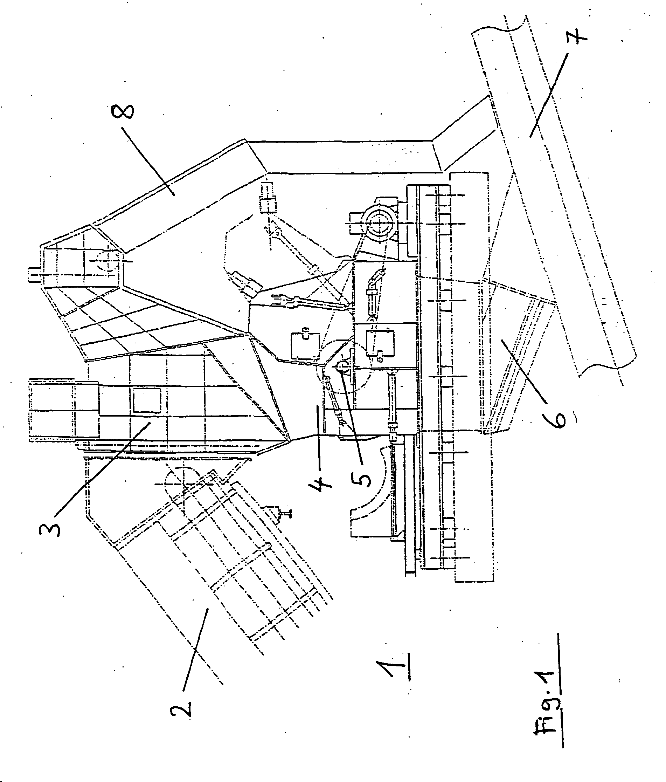

In Figur 1 ist eine herkömmliche Prallmühle (1) zur Zerkleinerung von Abfällen dargestellt. Die Abfälle, zum Beispiel Hausmüll, Restabfälle beziehungsweise Sortierreste, Gewerbe- oder Sperrmüll, werden zum Beispiel über ein Plattenband (2) in den Abfallschaft (3) befördert. Der Großteil der Abfälle fällt im Abfallschacht (3) nach unten in den Mühlenraum (4). Mittels des Mahllwerks (5) der Mühle werden die Abfälle zerkleinert und können aufgrund in der Figur nicht näher dargestellter veränderbarer Mahlparameter, wie zum Beispiel verstellbarem Rost oder verstellbarer Prallplatte und/oder verstellbarer Mahlbahn, gleichzeitig sortiert werden. Die so zerkleinerten und sortierten Abfälle verlassen die Mühle über eine Vibrationsrinne (6) und werden einem Abzugsband (7) aufgegeben. Zum Schutz des Mühlenraums (4) beziehungsweise des Prallwerks (5) der Mühle ist ein Störstoffaustrag über einen ballistischen Schacht (8) vorgesehen. Die auf diese Weise abgeschiedenen Störstoffe gelangen danach unsortiert wieder auf das Abzugsband (7) und werden gemeinsam mit den sortierten und zerkleinerten Abfällen einer Weiterbehandlung zugeführt.

In Figur (2) ist eine Prallmühle gezeigt, die sich von der in Figur 1 dargestellten Prallmühle durch erfindungsgemäße Veränderung des Störstoffaustrags zur gleichzeitigen Sortierung von Abfallfraktionen unterscheidet. Dieselben Vorrichtungsteile sind in der Figur mit den selben Bezugsziffern bezeichnet wie in Figur 1. Die Störstoffe und gegebenenfalls weitere Abfallfraktionen, insbesondere flugfähige Folien, werden vorn Abfallschacht (3) in den Störstoffaustragsschacht (8) überführt. Dabei wird insbesondere die Anreicherung von Folien durch fördertechnische Einrichtungen, im vorliegenden Ausführungsbeispiel mittels Transportrollen (9) beim Eingang in den Störstoffaustragsschacht (8) unterstützt. Zusätzlich wird durch Windsichtung in diesem Störstoffaustragsschacht (8) die Abtrennung der flugfähigen Abfallbestandteile von den schwereren Abfallbestandteilen durchgeführt. Hierzu ist eine Zuluft (10) vorgesehen, die eine Luftströmung quer zum Störstoffaustragsschacht (8) erzeugt. Gegenüber von der Zuluft (10) ist eine Abzweigung (19) vom Störstoffaustragsschacht (8) angeordnet. Am Übergang vom Störstoffaustragsschacht (8) in die Abzweigung (19) sind ebenfalls fördertechnische Einrichtungen, im vorliegenden Ausführungsbeispiel Transportrollen (11) angeordnet. Dadurch wird die Abtrennung der flugfähigen Folien unterstützt. Die flugfähigen Folien werden über die Abzweigung (19) einem Transportband (12) geführt. Die Folien können auf diese Weise separat abgezogen und einer Verwertung zugeführt werden. Mittels eines Abluftstutzens (13) wird die bei der Windsichtung anfallende Abluft abgeleitet und mittels einer in der Figur nicht dargestellten Rückführleitung und eine Abreinigung beziehungsweise Entstaubung zur Zuluft (10) zurückgeführt. Die nicht-flugfähigen Abfallbestandteile werden über einen nach unten weiterführenden Schacht (14) einem Wirbelstromabscheider (15) zugeführt. Mittels des Wirbelstromabscheiders (15) erfolgt eine Sortierung in Eisenbestandteile (16), inerte Teile (17) und Nicht-Eisenbestandteile (18).

## Patentansprüche

1. Verfahren zum Sortieren und Zerkleinern von Abfällen, insbesondere von kommunalem und/oder gewerblichem Müll, wobei die Abfälle einer Mühle (1) zugeführt werden und ein Teil der Abfälle im Mahlwerk (5) der Mühle (1) zerkleinert wird, während ein Störstoffanteil der Abfälle unter Umgehung des Mahlwerks (5) über einen Störstoffaustragsschacht (8) abgezogen wird, **dadurch gekennzeichnet, dass** der Störstoffaustragsschacht zur Sortierung von Abfallfraktionen eingesetzt wird.

2. Verfahren nach Anspruch 1, **dadurch gekennzeichnet, dass** der Störstoffanteil und gegebenenfalls weitere Abfälle, insbesondere flugfähige Abfälle mittels fördertechnischer Einrichtungen (9) in den Störstoffaustragsschacht überführt werden.

3. Verfahren nach Anspruch 1 oder 2, **dadurch gekennzeichnet, dass** flugfähige Abfallfraktionen mittels einer im Störstoffaustragsschacht (8) zumindest zeitweise eingeschalteten Gasströmung (10) von den restlichen Abfällen abgetrennt werden.

4. Verfahren nach einem der Ansprüche 1 bis 3, **dadurch gekennzeichnet, dass** die im Störstoffaustragsschacht (8) befindlichen Abfälle mittels fördertechnischer Einrichtungen (11) in verschiedene Abfallfraktionen sortiert und verschiedenen Abzweigungen (14, 19) des Störstoffaustrags zugeteilt werden.

5. Verfahren nach einem der Ansprüche 1 bis 4, **dadruch gekennzeichnet, dass** die über den Störstoffaustragsschacht (8) abgezogenen, nicht flugfähigen Abfälle mittels eines Wirbelstromabscheiders (15) in verschiedene Abfallfraktionen sortiert werden.

6. Vorrichtung zum Sortieren und Zerkleinem von Abfällen, insbesondere von kommunalem und/oder gewerblichem Müll, mit einer Mühle (1), welche einen Mühlenraum (4) mit einem Mahlwerk (5) aufweist, wobei der Mühlenraum (4) mit einem Abfallschacht (3) zur Zuführung der zu zerkleinernden Abfälle verbunden ist, und vom Abfallschacht ein Störstoffaustragsschacht (8) unter Umgehung des Mühlenraumes (4) abzweigt, **dadurch gekennzeichnet, dass** der Störstoffaustragsschacht (8) mit Einrichtungen zur Sortierung von Abfallfraktionen ausgestattet ist.

7. Vorrichtung nach Anspruch 6, **dadurch gekennzeichnet, dass** in Nähe der Abzweigung des Störstoffaustragsschachts (8) vom Abfallschacht (3) fördertechnische Einrichtungen (9) zur Überführung der Störstoffanteile und gegebenenfalls weiterer Abfälle, insbesondere flugfähiger Abfälle, in den Störstoffaustragsschacht (8) angeordnet sind.

8. Vorrichtung nach Anspruch 6 oder 7, **dadurch gekennzeichnet, dass** der Störstoffaustragsschacht (8) mit einer Gaszufuhreinrichtung (10) zur Windsichtung der Abfallfraktionen ausgestattet ist.

9. Vorrichtung nach Anspruch 8, **dadurch gekennzeichnet, dass** der Störstoffaustragsschacht (8) eine Gasabzugseinrichtung (13) aufweist, welche über eine Abreinigungseinrichtung mit der Gaszufuhreinrichtung (10) in Verbindung steht.

10. Vorrichtung nach einem der Ansprüche 6 bis 9, **dadurch gekennzeichnet, dass** der Störstoffaustragsschacht (8) mindestens eine Abzweigung (19) aufweist, wobei in Nähe der Abzweigung fördertechnische Einrichtungen (11) zur Überführung von Abfallfraktionen in die Abzweigung (19) angeordnet sind.

11. Vorrichtung nach einem der Ansprüche 6 bis 10, **dadurch gekennzeichnet, dass** am Ausgang des Störstoffaustragsschachts ein Wirbelstromabscheider (15) zur Sortierung von Abfallfraktionen angeordnet ist.

12. Vorrichtung nach einem der Ansprüche 6 bis 11, **dadurch gekennzeichnet, dass** der Störstoffaustragsschacht Vibrationseinrichtungen aufweist.

## Claims

1. Method for the sorting and crushing of waste, in particular of municipal and/or industrial waste, the waste being fed to a mill (1) and a part of the waste being crushed in the grinding gear (5) of the mill (1), whilst a foreign material component of the waste is extracted via a foreign material discharge shaft (8), bypassing the grinding gear (5), **characterized in that** the foreign material discharge shaft is used for the sorting of waste fractions.

2. Method according to Claim 1, **characterized in that** the foreign material component and, where necessary, other waste, in particular dispersible waste, is conveyed to the foreign material discharge shaft by means of materials-handling devices (9).

3. Method according to Claim 1 or 2, **characterized in that** dispersible waste fractions are separated from the rest of the waste by means of a gas current (10) which is switched on at least intermittently in the foreign material discharge shaft (8).

4. Method according to one of Claims 1 to 3, **characterized in that** the waste present in the foreign material discharge shaft (8) is sorted by means of materials-handling devices (11) into various waste fractions and is allotted to various branches (14, 19) of the foreign material chute.

5. Method according to one of Claims 1 to 4, **characterized in that** the non-dispersible waste extracted via the foreign material discharge chute (8) is sorted into various waste fractions by means of an eddy-current separator (15).

6. Apparatus for the sorting and crushing of waste, in particular of municipal and/or industrial waste, having a mill (1) comprising a mill chamber (4) with a grinding gear (5), wherein the mill chamber (4) is connected to a waste shaft (3) for feeding in the waste to be crushed and a foreign material discharge shaft (8) branches off from the waste shaft, bypassing the mill chamber (4), **characterized in that** the foreign material discharge shaft (8) is equipped with devices for the sorting of waste fractions.

7. Apparatus according to Claim 6, **characterized in that** close to the branching of the foreign material discharge shaft (8) from the waste shaft (3) there are disposed materials-handling devices (9) for transferring the foreign material components and, where necessary, other waste, in particular dispersible waste, into the foreign material discharge shaft (8).

8. Apparatus according to Claim 6 or 7, **characterized in that** the foreign material discharge shaft (8) is equipped with a gas-feed device (10) for the air separation of the waste fractions.

9. Apparatus according to Claim 8, **characterized in that** the foreign material discharge shaft (8) has a gas-extraction device (13), which is connected to the gas-feed device (10) via a cleaning device.

10. Apparatus according to one of Claims 6 to 9, **characterized in that** the foreign material discharge shaft (8) has at least one branch (19), close to which there are disposed materials-handling devices (11) for transporting waste fractions into the branch (19).

11. Apparatus according to one of Claims 6 to 10, **characterized in that** at the outlet of the foreign material discharge shaft there is disposed an eddy-current separator (15) for the sorting of waste fractions.

12. Apparatus according to one of Claims 6 to 11, **characterized in that** the foreign material discharge shaft has vibration devices.

## Revendications

1. Procédé de tri et de broyage de déchets, notamment d'ordures communales et/ou industrielles, les déchets étant amenés dans un broyeur (1) et une partie des déchets étant broyée dans le moulin (5) du broyeur (1), alors qu'une part d'impuretés des déchets est retirée via un puits d'évacuation des impuretés (8), en contournant le moulin (5), **caractérisé en ce que** le puits d'évacuation des impuretés est utilisé pour trier des fractions de déchets.

2. Procédé selon la revendication 1, **caractérisé en ce que** la part d'impuretés et le cas échéant d'autres déchets, notamment des déchets dispersibles sont transférés dans le puits d'évacuation des impuretés au moyen de dispositifs techniques de convoyage (9).

3. Procédé selon la revendication 1 ou 2, **caractérisé en ce que** des fractions de déchets dispersibles sont séparées des autres déchets au moyen d'un courant gazeux (10) mis en marche au moins temporairement dans le puits d'évacuation des impuretés (8).

4. Procédé selon l'une quelconque des revendications 1 à 3, **caractérisé en ce que** les déchets qui se trouvent dans le puits d'évacuation des impuretés (8) sont triés au moyens de dispositifs techniques de convoyage (11) et distribués dans différentes dérivations (14, 19) de l'évacuation des impuretés.

5. Procédé selon l'une quelconque des revendications 1 à 4, **caractérisé en ce que** les déchets non dispersibles, retirés par l'intermédiaire du puits d'évacuation des impuretés (8) sont triés en différentes fractions de déchets au moyen d'un cyclone (15).

6. Dispositif de tri et de broyage de déchets, notamment d'ordures communales et/ou industrielles, avec un broyeur (1) comportant un espace de broyeur (4) avec un moulin (5), l'espace de broyeur (4) étant relié à un puits à déchets (3), pour amener les déchets à broyer, et un puits d'évacuation des impuretés (8) dérivant du puits à déchets, en contournant l'espace de broyeur (4), **caractérisé en ce que** le puits d'évacuation des impuretés (8) est équipé de dispositifs de tri des fractions de déchets.

7. Dispositif selon la revendication 6, **caractérisé en ce qu'**à proximité de la dérivation du puits d'évacuation des impuretés (8) du puits à déchets (3), sont disposés des dispositifs techniques de convoyage (9) pour le transfert des parts d'impuretés et le cas échéant d'autres déchets, notamment de déchets dispersibles dans le puits d'évacuation des impuretés (8).

8. Dispositif selon la revendication 6 ou 7, **caractérisé en ce que** le puits d'évacuation des impuretés (8) est équipé d'un dispositif d'alimentation de gaz (10) pour le triage à vent des fractions de déchets.

9. Dispositif selon la revendication 8, **caractérisé en ce que** le puits d'évacuation des impuretés (8) comporte un évent à gaz (13), qui par l'intermédiaire d'un dispositif de dépoussiérage est en liaison avec le dispositif d'alimentation de gaz (10).

10. Dispositif selon l'une quelconque des revendications 6 à 9, **caractérisé en ce que** le puits d'évacuation des impuretés (8) comporte au moins une dérivation (19), des dispositifs techniques de convoyage (11) étant disposés à proximité de la dérivation, pour le transfert de fractions de déchets dans la dérivation (19).

11. Dispositif selon l'une quelconque des revendications 6 à 10, **caractérisé en ce qu'**à la sortie du puits d'évacuation des impuretés est disposé un cyclone (15), pour le tri de fractions de déchets.

12. Dispositif selon l'une quelconque des revendications 6 à 11, **caractérisé en ce que** le puits d'évacuation des impuretés comporte des dispositifs vibrants.
